# EUROPÄISCHE PATENTSCHRIFT

(11) **EP 2 377 729 B1**
(45) Veröffentlichungstag und Bekanntmachung des Hinweises auf die Patenterteilung: **09.10.2013**
(21) Anmeldenummer: 11002176.3
(22) Anmeldetag: 16.03.2011
(51) Int. Cl.: B60R 21/13

(54) **Vorrichtung zur Befestigung eines Überrollbügels oder dergleichen Anbauteiles an einem Fahrzeug**
Device for fixing a roll-bar or similar extension component on a vehicle
Dispositif de fixation d'un arceau de sécurité ou pièce rapportée analogue sur un véhicule

(30) Priorität: 14.04.2010 DE 202010004971 U
(43) Veröffentlichungstag der Anmeldung: 19.10.2011
(73) Patentinhaber: BOMAG GmbH, 56154 Boppard (DE)
(72) Erfinder: Bender, Matthias, 55494 Rheinböllen (DE); Dünchel, Diana, 56626 Andernach (DE); Baldus, Matthias, 56269 Marienhausen (DE); Darscheid, Thomas, 56154 Boppard (DE); Roetsch, Helmut, 56288 Beltheim (DE)
(74) Vertreter: Lang, Friedrich

(56) Entgegenhaltungen:
- FR-A1- 2 332 900
- US-A- 1 491 948
- US-A- 3 990 738

## Beschreibung

Vorliegende Erfindung betrifft eine Vorrichtung zur Befestigung eines Überrollbügels oder dergleichen Anbauteiles an einem Fahrzeug und insbesondere an einer Vibrationswalze.

Darüber hinaus betrifft vorliegende Erfindung einen Überrollbügel oder dergleichen Anbauteile zum Anbau an ein Fahrzeug mit einer solchen Vorrichtung.

Vorliegende Vorrichtungen bzw. Überrollbügel sind aus dem Stand der Technik bekannt. Gerade bei Fahrzeugen aus dem Baubereich und insbesondere bei Vibrationswalzen ist es notwendig Überrollbügel oder dergleichen Anbauteile, wie beispielsweise Schutzbügel, aber auch Haltebügel für Steuerkonsolen etc. so am Fahrzeug zu montieren, dass die Fahrzeugvibrationen nicht auf den Bügel übertragen werden oder umgekehrt. US 3990783 A offenbart eine Vorrichtung gemäß dem Oberbegriff des Anspruchs 1.

Hierzu sind unterschiedliche Lösungen bekannt. Grundlegende Idee ist es den Bügel so vibrationsdämpfend vom Fahrzeug zu entkoppeln, dass es nicht zu einer Körperschallübertragung der Vibrationen kommt. Dazu beschreibt beispielsweise die US 4,007,655 A einen Überrollbügel für ein Fahrzeug (im Folgenden auch ROPS genannt) wobei ein Pfostenelement des ROPS an seinem Ende auf einer mit Elastomereinlagen versehenen, mit dem Rahmen des Fahrzeugs fest verbundenen Einheit montiert wird. Zur Befestigung dient eine Durchgangsschraube mit einer Mutter.

. Eine andere Lösung beschreibt die US 3,450,430 A. Sie beschreibt eine Kabine und einen Überrollbügel für ein Fahrzeug, wobei die Holme des Überrollbügels durch einen Kanal in der Kabinenwand kontaktfrei verlaufen, so dass der Fahrer in der Kabine, die auf einem elastischen Material aufliegt, vor den Schwingungen des Überrollbügels geschützt ist. Die Befestigung des Überrollbügels selbst erfolgt dagegen starr auf dem Rahmen.

Die US 6,450,473 B1 betrifft dagegen einen dynamischen Schwingungstilger eines Fahrzeuges. Die Kernidee besteht hier darin, mithilfe eines schwingungsfähigen Tilgersystems, die am Fahrzeug auftretenden Vibrationen in bestimmten Frequenzbereichen zu verringern. Dabei können die Schwingungstilger auf einer Halterung montiert sein, welche zusätzlich durch Gummipuffer gedämpft sind.

Eine ähnliche Vorrichtung zeigt die US 3,872,950 A, bei der ebenfalls ein Schwingungsdämpfer für einen Überrollbügel eines Fahrzeuges verwendet wird. Hier wird ein hohlförmiger Überrollbügel an einem Montagefortsatz montiert, wobei der Überrollbügel vom Montagefortsatz durch Gummidämpfer getrennt wird. Die Masse des Montagefortsatzes wird dabei so gewählt, dass eine gegenseitige Aufhebung der Schwingungen ermöglicht wird.

Die zuvor beschriebenen Konstruktionen erlauben die schwingungsfreie Montage eines Überrollbügels oder dergleichen Bauteils an einem Fahrzeug nur unter hohem Aufwand und begleitet von technisch komplexen Systemen. Die insbesondere freie Positionierung eines Überrollbügels am Fahrzeug wird hier meist überhaupt nicht ermöglicht.

Der vorliegenden Erfindung liegt folglich die Aufgabe zugrunde, eine Vorrichtung der Eingangs genannten Art zur Verfügung zu stellen, die eine einfachere und hinsichtlich der Vibrationsdämpfung verbesserte Montage eines Überrollbügels oder dergleichen Anbauteils an einem Fahrzeug und insbesondere einer Vibrationswalze erlaubt.

Diese Aufgabe wird durch eine Vorrichtung gemäß Schutzanspruch 1 und durch einen Überrollbügel oder dergleichen Anbauteil gemäß Schutzanspruch 9 gelöst.

Insbesondere wird diese Aufgabe durch eine Vorrichtung zur Befestigung eines Überrollbügels oder dergleichen Anbauteiles an einem Fahrzeug, insbesondere einer Vibrationswalze gelöst, mit einer inneren Montagehülse, die mit einer Bügelaufnahme am Fahrzeug in Wirkverbindung steht oder bringbar ist, einer äußeren Montagehülse, die die innere Montagehülse wenigstens teilweise umgibt und die mit dem Überrollbügel in Wirkverbindung steht oder bringbar ist, und wenigstens einem Elastomerelement, das die innere Montagehülse relativ zur äußeren Montagehülse derart positioniert, dass die beiden Hülsen von einander unter Bildung eines Vibrationsfreiraumes beabstandet sind wobei ein Teilabschnitt der Hülsen zur Aufnahme des Elastomerelementes so ausgebildet ist, dass er in Richtung eines Vorschneidungsbereichs ebenfalls eine Anschlagfläche für das Elastomerelement aufweist.

Darüber hinaus wird diese Aufgabe durch einen Überrollbügel oder dergleichen Anbauteil zum Anbau an ein Fahrzeug, insbesondere an eine Vibrationswalze gelöst, mit wenigstens einer am Überrollbügel ausgebildeten und insbesondere integrierten Vorrichtung der zuvor genannten und im Folgenden noch detaillierter ausgeführten Art.

Wesentlicher Punkt der Vorrichtung bzw. des damit ausgerüsteten Überrollbügels ist die Verwendung zweier Montagehülsen, die derart ausgebildet sind, dass eine äußere Montagehülse, die am Überrollbügel angeordnet und insbesondere in diesen integriert ist eine innere Montagehülse wenigstens teilweise umschließt, wobei diese innere Montagehülse der Befestigung am Fahrzeug dient. Zwischen der äußeren Montagehülse und der inneren Montagehülse ist ein Elastomerelement so angeordnet, dass die beiden Montagehülsen miteinander in Wirkverbindung stehen, aber bis auf diesen Bereich, in denen sie über das Elastomerelement miteinander verbunden sind, kontaktfrei sind. Sie bilden dort folglich einen Vibrationsfreiraum. Das Elastomerelement dient u.a. der Lastübertragung vom Bügel in das Fahrzeug und umgekehrt. Durch obiges "Kopplungselement", bestehend aus innerer Montagehülse, äußerer Montagehülse und zwischengeschaltetem Elastomerelement, lässt sich eine sehr kompakte und einfach Vorrichtung schaffen, um einen Überrollbügel oder ein dergleichen Anbauteil vibrationsdämpfend an einem Fahrzeug zu montieren.

Unter Montagehülse werden im Umfang der vorliegenden Erfindung sämtliche Hohlkörperbauteile verstanden, bei denen das Erfordernis des Umschließens, dass also die äußere Montagehülse die innere Montagehülse wenigstens teilweise umschließt bzw. umgibt erfüllt werden kann. Unter dem Begriff äußerer Montagehülse wird im Umfang der vorliegenden Erfindung jedes Bauteil verstanden, dass wenigstens teilweise zur Aufnahme der inneren Montagehülse ausgebildet ist. Insofern umfasst also der Begriff äußere Montagehülse also auch einen Hohlzylinder oder dergleichen Bauteil der in seiner Längsachse durchgängig offen ist. Auch umfasst sind von diesem Begriff aber auch Bauteile, die beispielsweise auf einer Seite verschlossen, also topfförmig etc. ausgebildet sind. Unter innerer Montagehülse wird im Umfang der Erfindung jedes Bauteil verstanden, dass unter Bildung des Vibrationsfreiraumes so in die äußere Montagehülse eingeführt werden kann, dass sie wenigstens teilweise von dieser umgeben ist. Es werden also hier Bauteile verstanden die sowohl als Hohlkörper als auch als Massivbauteile ausgeführt sind.

Vorzugsweise sind dabei die innere Montagehülse und/oder die äußere Montagehülse zu ihrer jeweiligen Längsachse rotationssymmetrisch und/oder koaxial ausgebildet. Die Ausbildung einer Rotationssymmetrie erlaubt die Ausbildung einer dämpfenden Befestigungsvorrichtung, die in nahezu jede Richtung orthogonal zur Längsachse der Hülsen ähnliche Eigenschaften aufweist. Ähnliches gilt für die koaxiale Ausbildung der beiden Montagehülsen.

Vorzugsweise ist die innere Montagehülse so ausgebildet, dass sie in direkten Presskontakt mit dem Fahrzeug unter gleichzeitiger Entkopplung der anderen Bauteile der Vorrichtung bzw. des zugeordneten Montagebügels bringbar ist. Diese Entkopplung wird dadurch erreicht, dass die innere Montagehülse so ausgebildet ist, dass sich zu allen zugeordneten Bauteilen der Vorrichtung und des Montagebügels wenigstens ein Vibrationsfreiraum wie zuvor beschrieben ist einstellt.

Vorzugsweise weist das Elastomerelement eine Elastomerhülse auf, die zwischen der inneren Montagehülse und der äußeren Montagehülse angeordnet ist. Diese Elastomerhülse umgibt also beispielsweise die Außenwandung der inneren Montagehülse vollständig, wobei das Elastomerelement auf der Außenwandung der inneren Montagehülse fixiert ist. Gleichzeitig steht jedoch diese Montagehülse auch an der Innenwandung der äußeren Montagehülse so an, dass sich ein Kraftschluss zwischen der inneren und der äußeren Montagehülse ergibt. Dieser Kraftschluss dient dazu Lagerkräfte vom Überrollbügel über die äußere Montagehülse in die innere Montagehülse und von dort in das Fahrzeug oder umgekehrt zu übertragen.

Natürlich ist es anstelle der Ausbildung einer radial umlaufenden Elastomerhülse auch möglich, die Elastomerhülse bzw. das Elastomerelement auch nur punktuell auf der inneren Montagehülse bzw. in der äußeren Montagehülse anzuordnen. So ist es beispielsweise möglich ein Elastomerelement auszubilden, das vollflächig radial die Außenwandung der inneren Montagehülse umläuft, an der Innenwandung der äußeren Montagehülse jedoch nur mit entsprechenden Elastomerstegen ansteht. Auch ist es möglich das Elastomerelement bzw. eine Elastomerhülse mit entsprechenden Verstärkungselementen zu versehen, um insbesondere die Krafteinleitung und Kraftableitung zu verbessern. Solche Elemente können beispielsweise Stahl- oder entsprechenden lastverteilende Einlagen sein.

Erfindungsgemäß ist das Elastomerelement bezogen auf die Längsachse der inneren Montagehülse und/oder der äußeren Montagehülse nur entlang eines Teilabschnitts der Längsachse angeordnet. Das bedeutet also, dass beispielsweise das Elastomerelement lediglich über 50 % der Gesamtlängsachsenlänge der jeweiligen Montagehülse auf der inneren Montagehülse bzw. in der äußeren Montagehülse ausgebildet ist. Die verbleibenden 50 % können dann, wie im Folgenden noch detailliert beschrieben, beispielsweise für einen Verschneidungsbereich zur Führung der beiden Montagehülsen relativ zueinander und insbesondere in Richtung der Längsachse verwendet werden. Natürlich ist es auch möglich mehrer Elastomerelemente bzw. Elastomerhülsen insbesondere entlang der Längsachse anzuordnen, wenn dies nötig ist.

Vorzugsweise wird der Teilabschnitt durch eine insbesondere radial umlaufende Aussparung auf der Außenwandung der inneren Montagehülse und/oder auf der Innenwandung der äußeren Montagehülse bzw. einen wenigstens teilweise komplementär zum Elastomerelement ausgebildeten Elastomersitz gebildet. Eine solche Aussparung bzw. ein solcher Sitz kann beispielsweise eine Nut sein, in die eine entsprechend komplementär ausgeformte Elastomerhülse oder ein entsprechend komplementär ausgeführtes Elastomerelement eingesetzt werden kann. Auf diese Weise ist die kraftschlüssige Positionierung des Montageelementes auf bzw. in der jeweiligen Montagehülse möglich. Die Ausbildung der Aussparung kann dabei in beiden Symmetrieachsen der Montagehülse erfolgen. So kann also die Aussparung sowohl ein radial verlaufender Rücksprung bzw. Vorsprung in der Innenwandung bzw. Außenwandung der jeweiligen Hülsen sein es ist aber auch möglich eine Aussparung bzw. Hinterschneidung in Längsachsenrichtung vorzusehen, so dass beispielsweise das Elastomerelement in einer Art Nut- und Federsystem an der jeweiligen Montagehülse befestigt werden kann. Hier sind sämtliche aus dem Stand der Technik bekannte Verfahren zur insbesondere Klemmfixierung eines Elastomerelementes in oder an einem Gegenstand anwendbar.

Erfindungsgemäß weisen die innere Montagehülse und die äußere Montagehülse gegenseitig einen Verschneidungsbereich auf, der derart ausgebildet ist, dass er eine Bewegung der äußeren Montagehülse relativ zur inneren Montagehülse, insbesondere in entgegengesetzter Richtung zur Bügelaufnahme am Fahrzeug über den durch die beiden Hülsen gebildeten Vibrationsfreiraum hinaus verhindert. Das bedeutet, dass der Verschneidungsbereich so ausgebildet ist, dass sich zwar die beiden Hülsen relativ zueinander, insbesondere durch den Vibrationsfreiraum voneinander getrennt, relativ zueinander bewegen können sich aber dabei nicht berühren. Erst wenn die Relativbewegung zueinander größer ist als der durch die beiden Hülsen gebildete Vibrationsfreiraum stoßen die beiden Hülsen im Verschneidungsbereich aneinander an. Insofern dient also der Verschneidungsbereich der Sicherung der beiden Hülsen relativ zueinander falls der Kraftschluss des Elastomerelementes versagt. Wenn also das Elastomerelement nicht mehr in der Lage ist die Relativbewegung der beiden Hülsen zueinander zu dämpfen, Lasten entsprechend überzuleiten und insbesondere die beiden Hülsen relativ zueinander unter Bildung des Vibrationsfreiraumes zu positionieren, verhindert der Verschneidungsbereich, dass die beiden Hülsen aneinander schlagen und insbesondere dass die innere Montagehülse aus der äußeren Montagehülse hinaus gleitet. Auch bei Belastungen des Bügels, die die durch das Elastomerelement maximal übertragbaren Lasten übersteigen, treten die Elemente des Verschneidungsbereiches so miteinander in Kontakt, dass eine zerstörungsfreie und sichere Lastableitung gewährleistet ist.

Vorzugsweise weist zur Bildung des Verschneidungsbereiches die innere Montagehülse wenigstens einen insbesondere radial aus ihrer äußeren Hülsenwandung hervorspringenden Arretierungsfortsatz und die äußere Montagehülse wenigstens einen radial in ihrer inneren Hülsenwandung zurückspringende Fortsatzaufnahme auf, in die der Arretierungsfortsatz wenigstens unter Beibehaltung des Vibrationsfreiraumes einragt, oder umgekehrt. Ein solches "Zapfensystem" garantiert im besonderen Maße die Lagesicherung der beiden Montagehülsen relativ zueinander, sollte der Kraftschluss durch das Elastomerelement versagen. Auch beim Auftreten sehr hoher Relativbewegungen zueinander können die zuvor beschriebenen Verschneidungsbereiche das Zerstören des Elastomerelementes verhindern, in dem die Relativbewegung durch das gegenseitige Anschlagen der Hülsen aneinander im Verschneidungsbereich gestoppt wird. Dieses Aneinanderschlagen überträgt dann zwar Vibrationen vom Fahrzeug auf den Überrollbügel und umgekehrt, verhindert jedoch effektiv eine insbesondere Überdehnung des Elastomerelementes und dessen Zerstörung bzw. dessen Ablösen von den Hülsenwandungen.

Der Arretierungsfortsatz und/oder die Fortsatzaufnahme sind dabei vorzugsweise radial umlaufend ausgebildet, um eine möglichst große Anschlagfläche und somit eine möglichst effektive Krafteinleitung und Vermeidung etwaiger Zerstörung der jeweiligen Bauteile zu gewährleisten.

Vorzugsweise wird der Verschneidungsbereich durch eine Falzanschlagkonstruktion gebildet, wobei an der inneren Montagehülse und/oder an der äußeren Montagehülse ein oder mehrere Falze ausgebildet werden, die unter Beibehaltung des jeweiligen Vibrationsfreiraumes geeigneten Anschlagflächen gegenüberstehen, die an der jeweils anderen Montagehülse ausgebildet werden. Erst nach einer Relativbewegung der beiden Hülsen, die den Vibrationsfreiraum übersteigt, treten die Falze mit den Anschlagflächen in Kontakt so dass die Relativbewegung gestoppt wird.

Vorzugsweise sind bezogen auf die Längsachse der inneren Montagehülse und/oder der äußeren Montagehülse der Verschneidungsbereich und der Teilabschnitt hintereinander angeordnet. Auf diese Weise ist es also möglich eine sehr kompakte Vorrichtung zu bilden, bei der die Serienschaltung von Teilabschnitt, also Lagerung des Elastomerelementes über einen bestimmten Bereich der Längsachse, und Verschneidungsbereich, hier also die Lagesicherung der beiden Montagehülsen relativ zueinander bei einem Versagen des Elastomerelementes, zu einem sehr kleinen und kompakten Bauteil führt.

Vorzugsweise weist die innere Montagehülse in ihrem Hülseninnenraum eine Befestigungselementaufnahme auf, die mit einem Befestigungselement an der Bügelaufnahme in Wirkeingriff bringbar ist, oder umgekehrt. Eine solche Befestigungselementaufnahme kann beispielsweise ein Innengewinde sein in die dann ein Schraubbolzen, der am Fahrzeug befestigt oder durch eine entsprechende Bolzenaufnahme am Fahrzeug geführt werden kann, einschraubbar ist wodurch die Vorrichtung samt dem zugeordneten Überrollbügel am Fahrzeug befestigbar ist. Natürlich kann diese Konstruktion auch in andere Richtung ausgeführt werden, dass also an der inneren Montagehülse ein Schraubbolzen befestigt ist, der durch eine entsprechende Schraubbolzenaufnahme am Fahrzeug geführt und mit einer Mutter gekontert werden kann. Auch hier sind sämtliche aus dem Stand der Technik bekannte Befestigungssysteme anwendbar.

Grundsätzlich ist es natürlich möglich mehrer Vorrichtungen am Überrollbügel oder dergleichen Anbauteil vorzusehen und insbesondere darin zu integrieren. Auch ist es natürlich möglich unterschiedliche aber in ihrer Funktion ähnliche Vorrichtungen parallel an einem Bügel zu verwenden. So können also beispielsweise Vorrichtungen mit an der inneren Montagehülse angeordneten Schraub- oder Lagerbolzen zusammen mit Vorrichtungen versehen werden, in die dann geeignete Arretierungsbolzen eingeschraubt werden können. Hier sind ebenfalls sämtliche aus dem Stand der Technik bekannte Vorrichtungen anwendbar.

Die erfindungsgemäße Vorrichtung kann sowohl am Überrollbügel integriert, also integral mit diesem ausgebildet sein, sie kann aber auch über entsprechende Befestigungsmittel und insbesondere lösbar an den jeweiligen Überrollbügeln oder am Fahrzeug befestigt werden. Auch ist es möglich entsprechende Steck- oder Rastvorrichtungen vorzusehen, mit der die Vorrichtung am jeweiligen Überrollbügel oder Anbauteil befestigbar ist.

Vorzugsweise ist der Verschneidungsbereich so ausgeführt, dass die innere Montagehülse wenigstens von einer Montageseite in die äußere Montagehülse eingeführt werden kann. Dies erleichtert das Zusammensetzen der Vorrichtung deutlich.

Weitere Ausführungsformen der Erfindung ergeben sich aus den Unteransprüchen.

Im Folgenden wird die Erfindung anhand zweier Ausführungsbeispiele beschrieben, die durch die beiliegenden Zeichnungen näher erläutert sind. Hierbei zeigen:
- Fig. 1: eine schematische Seitenansicht eines Führerstandes einer Vibrationswalze;
- Fig. 2: eine schematische Rückansicht der Vibrationswalze aus Fig. 1;

- Fig. 3: eine Detaildarstellung einer Ausführungsform der Vorrichtung zur Befestigung eines Überrollbügels an der Vibrationswalze gemäß der Schnittführung aus Fig. 2;
- Fig. 4: eine isometrische Darstellung einer zweiten Ausführungsform der erfindungsgemäßen Vorrichtung zur Befestigung eines Überrollbügels an einer Vibrationswalze;
- Fig. 5: eine Detaildarstellung der Vorrichtung gemäß Fig. 4, und
- Fig. 6: eine Detaildarstellung der Vorrichtung gemäß Fig. 5.

Im Folgenden werden für gleiche und gleich wirkende Bauteile dieselben Bezugsziffern verwendet, wobei zur Unterscheidung Hochindizes ihre Anwendung finden.

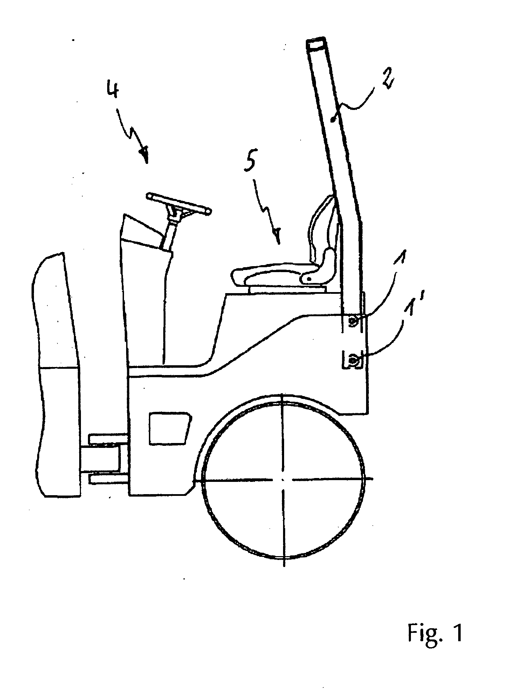

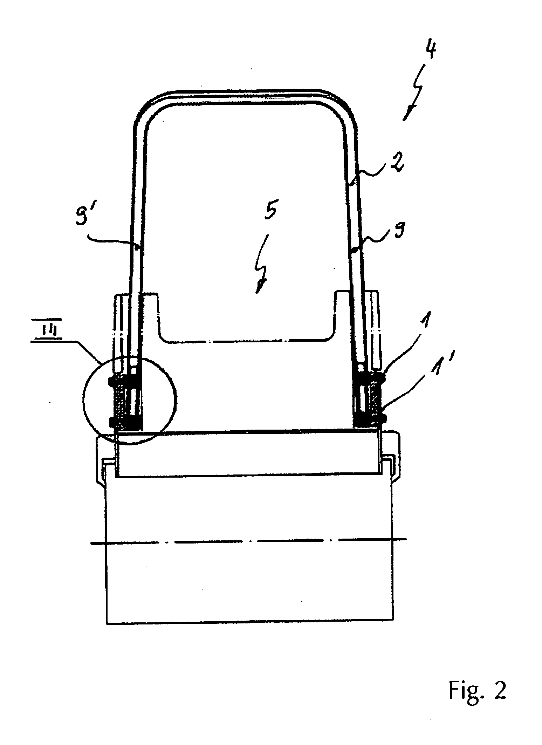

Die Fig. 1 und 2 zeigen schematisiert den Führerstand 5 einer Vibrationswalze 4 in einer Seitenansicht (Fig. 1) und einer Rückansicht (Fig. 2). Die Vibrationswalze bzw. das Fahrzeug 4 verfügt über einen Führerstand 5, auf der sich der Fahrer bei der Führung des Fahrzeuges 4 befindet. Um den Bediener insbesondere beim Umkippen des Fahrzeuges aber auch bei extern einwirkenden Lasten vor Schäden zu bewahren ist am Fahrzeug 4 ein Überrollbügel 2 befestigt. Um zu verhindern, dass bei Betrieb des Fahrzeuges 4 Vibrationen vom Fahrzeug 4 in den Überrollbügel 2 eingetragen werden ist dieser mit einer Ausführungsform der erfindungsgemäßen Vorrichtung 1 zur Befestigung eines Überrollbügels an einem Fahrzeug ausgestattet. Wie insbesondere in Fig. 2 dargestellt sind bei dieser Ausführungsform insgesamt vier solcher Vorrichtungen 1 vorgesehen, um den Überrollbügel 2 über seine beiden Schenkel 9 am Fahrzeug 4 zu befestigen.

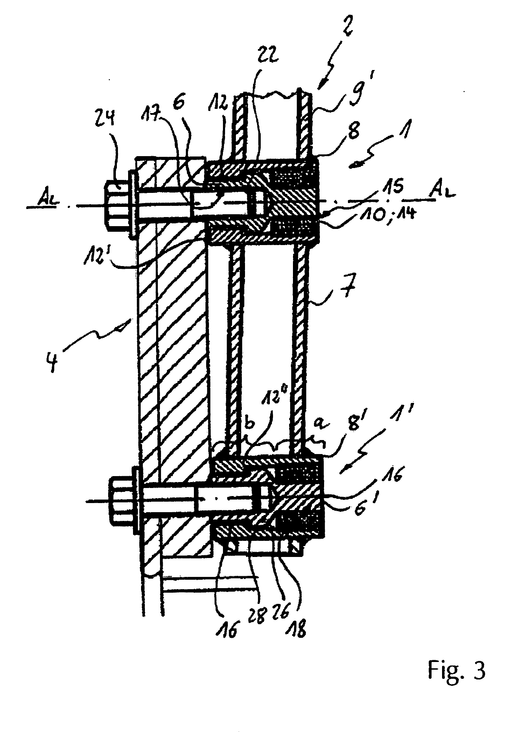

Die Vorrichtungen 1 ist in Fig. 3 entsprechend der in Fig. 2 dargestellten Schnittführung im Detail dargestellt.

Der Überrollbügel 2 besteht hier aus einem Hohlrohr 7, in das pro freiem Schenkel 9 jeweils zwei der erfindungsgemäßen Vorrichtungen 1 eingearbeitet sind. Bei dieser Ausführungsform ist also die jeweilige Vorrichtung 1 bzw. wenigstens ein Bauteil der Vorrichtung 1 integral mit dem jeweiligen Schenkel 9 des Überrollbügels 2 ausgebildet.

Die erfindungsgemäße Vorrichtung 1 umfasst eine äußere Montagehülse 8, die hier mit dem Hohlrohr 7 des Überrollbügels 2 verschweißt ist. Im inneren der äußeren Montagehülse 8 ist eine innere Montagehülse 6 angeordnet, die über ein Befestigungsmittel 24, hier einem Schraubbolzen, am Fahrzeug 4 anschraubbar ist. Die innere Montagehülse 6 und die äußere Montagehülse 8 sind dabei über ein Elastomerelement 10, dass hier als Elastomerhülse 14 ausgebildet ist kraftschlüssig miteinander gekoppelt, wobei sie derart relativ zueinander ausgebildet und angeordnet sind, dass sie über einen Vibrationsfreiraum 12 außer Kontakt stehen. Vibrationen, die über das Fahrzeug 4 und das Befestigungselement 24 in die innere Hülse 6 eingetragen werden, werden folglich durch die Ausbildung des Vibrationsfreiraumes 12 und die schalltechnische Entkopplung mittels des Elastomerelementes 10 nicht auf die äußere Montagehülse 8 und von dort weiter in den Überrollbügel 2 eingeleitet. Lasten, die beispielsweise über den Bügel 2 eingeleitet werden, werden über das Elastomerelement 10 sicher in das Fahrzeug 4 abgetragen.

Die Festlegung des Befestigungselementes 24 erfolgt bei dieser Ausführungsform über eine Befestigungselementaufnahme 22, hier in Form eines Innengewindes auf der Innenwandung 17 der inneren Montagehülse 6 ausgebildet ist.

Die innere Montagehülse 6 ist hier als ein innerer Montagebolzen ausgeführt, wobei die dort in einem Teilbereich a ausgebildete Aussparung 15 die Aufnahme des Elastomerelementes 10 bzw. der Elastomerhülse 14 erlaubt. Zudem ist an einem Verschneidungsbereich b eine Lagesicherung zwischen innerer Monatagehülse 6 und äußerer Montagehülse 8 zu Verfügung stellt.

Der Teilbereich a ist bei dieser Ausführungsform durch einen Rücksprung der Außenwandung 16 der inneren Montagehülse 6 und einen Rücksprung der Innenwandung 18 der äußeren Montagehülse 8 gebildet. In diese durch die beiden Rücksprünge gebildete Aussparung 15 greift das Elastomerelement 10 kraftschlüssig eine, so dass die innere Montagehülse 6 definiert zur äußeren Montagehülse 8 positioniert ist. Bei dieser Ausführungsform ist der durch diese Positionierung resultierende Vibrationsfreiraum 12 so ausgebildet, dass "normal" zu erwartende Vibrationen nicht zu einem Anschlagen der beiden Hülsen 6, 8 aneinander führen.

In Bezug auf die hier dargestellten Längsachsen A_{L} der beiden koaxial angeordneten Montagehülsen 6, 8 ist neben dem Teilabschnitt a der Verschneidungsbereich b ausgebildet, der der Lagesicherung der beiden Hülsen relativ zueinander dient. Dazu ist bei dieser Ausführungsform an der inneren Montagehülse 6 ein hervorspringender Arretierungsfortsatz 26 ausgebildet, der in eine rückspringende Fortsatzaufnahme 28 an der äußeren Montagehülse 8 eingreift. Der Arretierungsfortsatz 26 und die Fortsatzaufnahme 28 sind dabei so ausgebildet und angeordnet, dass sich zwischen ihnen trotzdem ein Vibrationsfreiraum 12 einstellt, so dass es bei normalen Vibrationen der beiden Bauteile nicht zu einem Aneinanderschlagen kommt. Erst bei einem Versagen des Kraftschlusses durch das Elastomerelement 10 bzw. bei Vibrationen, die den normalen Schwingungsverlauf übersteigen kommt es zu einem Anschlagen, so dass die Relativbewegung der beiden Hülsen zueinander gestoppt wird. Auch bei Belastungen des Bügels 2, die die durch das Elastomerelement 10 maximal übertragbaren Lasten übersteigen, treten die Elemente des Verschneidungsbereiches b miteinander in Kontakt, so das eine zerstörungsfreie und sichere Lastableitung gewährleistet ist. Zudem kommt es insbesondere bei einem Versagen des Kraftschlusses am Elastomerelement 10 nicht zu einem Ausgleiten der inneren aus der äußeren Montagehülse 6, 8, da dann der Verschneidungsbereich b die Lagerung der beiden Bauteile 6,8 relativ zueinander sicherstellt. Anstelle der hier dargestellten Ausbildung eines einzigen Fortsatzes 26 bzw. einer einzigen Fortsatzaufnahme 28 können natürlich auch mehrere solcher Aufnahmen ausgebildet werden.

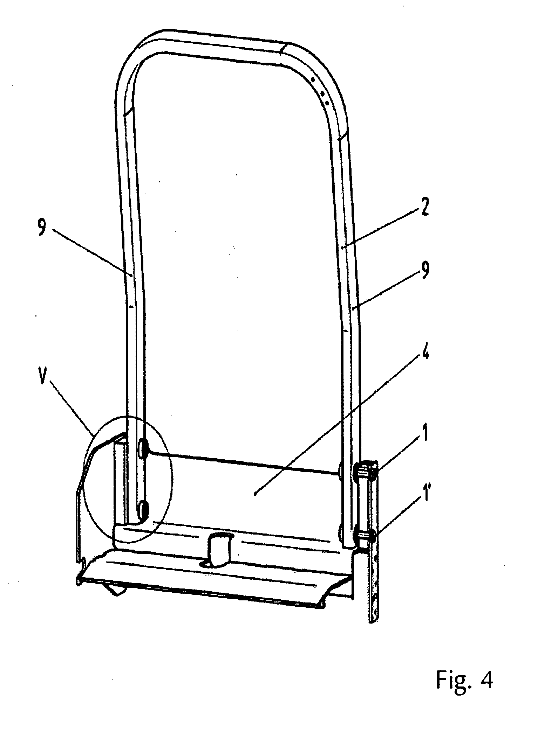

Fig. 4 zeigt eine zweite Ausführungsform der erfindungsgemäßen Montagevorrichtung, wobei auch hier ein Überrollbügel 2 mit seinen beiden Schenkeln 9 über entsprechende Vorrichtungen 1 an einem Fahrzeug 4 und insbesondere einer Vibrationswalze befestigt wird.

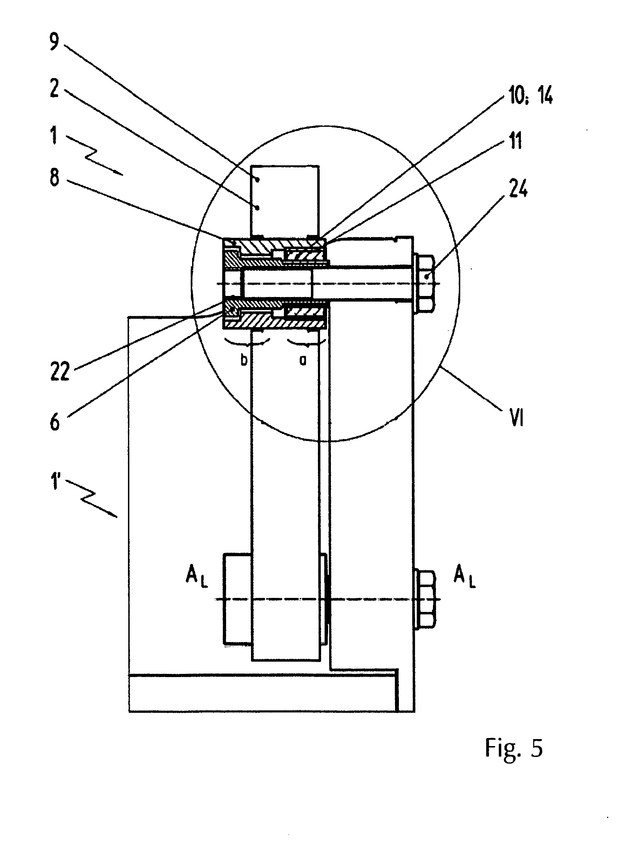

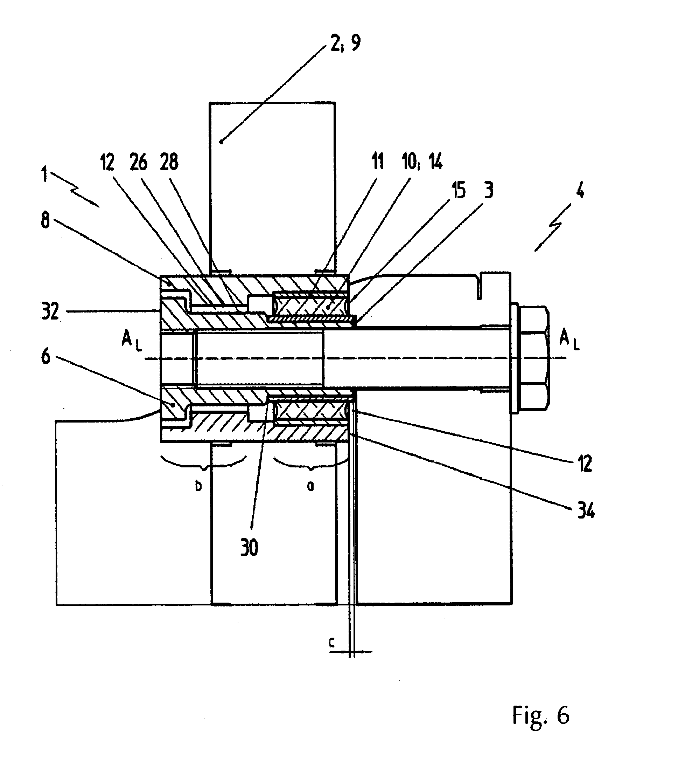

Wie in den Fig. 5 und 6 dargestellt umfasst die erfindungsgemäße Vorrichtung auch hier wieder eine innere Montagehülse 6, die teilweise von einer äußeren Montagehülse 8 umgeben ist, die am Schenkel 9 des Überrollbügels 2 fixiert und insbesondere angeschweißt ist. Im Gegensatz zur vorhergehenden Ausführungsform ist hier auch die innere Montagehülse 6 als vollständiger Hohlkörper ausgebildet. Die Befestigung der Vorrichtung 1 erfolgt wieder über ein Befestigungselement 24 und insbesondere einen Schraubbolzen, der in ein Innengewinde 22 an der inneren Montagehülse 6 eingeschraubt werden kann.

Wie hier dargestellt umfasst das die innere Montagehülse 6 und die äußere Montagehülse 8 zueinander positionierenden Elastomerelement 10 Verstärkungseinlagen 11, die insbesondere einer gleichmäßigen Lasteinleitung dienen.

Ebenfalls dargestellt ist wieder ein Verschneidungsbereich b, der eine Lagesicherung der beiden Montagehülsen 6, 8 insbesondere in Richtung der Längsachse A_{L} und insbesondere beim Versagen des Kraftschlusses durch das Elastomerelement 10 sicherstellt. Der Verschneidungsbereich b umfasst wie bei der Ausführungsform zuvor einen Arretierungsfortsatz 26 und eine Fortsatzaufnahme 28, die in Form von Anschlagflansch und Flanschaufnahme ein Lagersicherung der Hülsen 6, 8 insbesondere in Längsrichtung A_{L} sicherstellen. Auch hier ist wieder das Elastomerelement 10 in Form einer Elastomerhülse 14 in einem Teilbereich a in Bezug auf die Längsachse A_{L} der beiden Hülsen 6, 8 angeordnet.

Wie insbesondere in Fig. 6 erkennbar ist der Teilabschnitt a zur Aufnahme des Elastomerelementes 10 bzw. der Elastomerhülse 14 so ausgebildet, dass er in Richtung des Verschneidungsbereiches b ebenfalls eine Anschlagfläche 30 aufweist, gegen die das Elastomerelement 10 bei einer Bewegung der beiden Hülsen 6, 8 relativ zueinander in Richtung der Längsachse A_{L} anschlägt. Auf diese Weise wird gewährleistet, dass eine Vibration nicht nur in radialer sonder auch in Längsrichtung effektiv erfolgt ohne, dass es zu einem Ablösen des insbesondere Haftreibungsschlusses zwischen dem Elastomerelement 10 und der inneren Montagehülse 6 kommt.

Vorzugsweise ist der Verschneidungsbereich so ausgeführt, dass die innere Montagehülse 6 wenigstens von einer Montageseite in die äußere Montagehülse 8 eingeführt werden kann. Dies erleichtert das Zusammensetzen der Vorrichtung 1 gravierend.

Die innere Montagehülse 6 und die äußere Montagehülse 8 und insbesondere deren gemeinsamer Verschneidungsbereich b sind so ausgebildet, dass die innere Montagehülse 6 von einer Montageseite 32 in die äußere Montagehülse 8 eingeführt werden kann. Bei dieser Ausführungsform wird dazu zuerst die innere Montagehülse 6 in die äußere Montagehülse 8 eingeführt, anschließend das Elastomerelement 10 in Form der Elastomerhülse 14 in die Aussparung 15 im Teilabschnitt a einfügt und so die fertig konfektionierte Vorrichtung 1 montagefertig gestellt.

Bei dieser Ausführungsform ist die innere Montagehülse 6 so ausgebildet und angeordnet, dass sie in Bezug auf den Endrand 34 der äußeren Montagehülse 8 um den Spielbetrag c in Richtung der Längsachse A_{L} auf die Bügelaufnahme 3 weisend hervorsteht, so dass nach der Montage der Vorrichtung 1 bzw. des Überrollbügels 2 am Fahrzeug 4 in diesem Bereich ebenfalls ein Vibrationsfreiraum 12' gebildet wird, der im Wesentlichen dem Vibrationsfreiraum 12 zwischen innerer Montagehülse 6 und äußerer Montagehülse 8 entspricht.

## Patentansprüche

1. Vorrichtung (1) zur Befestigung eines Überrollbügels (2) oder dergleichen Anbauteiles an einem Fahrzeug (4), insbesondere einer Vibrationswalze, mit
einer inneren Montagehülse (6), die mit einer Bügelaufnahme (3) am Fahrzeug (4) in Wirkverbindung steht oder bringbar ist,
einer äußeren Montagehülse (8), die die innere Montagehülse (6) wenigstens teilweise umgibt und die mit dem Überrollbügel (2) in Wirkverbindung steht oder bringbar ist, und
wenigstens einem Elastomerelement (10), das die innere Montagehülse (6) relativ zur äußeren Montagehülse (8) derart positioniert, dass die beiden Hülsen (6, 8) von einander unter teilweiser Bildung eines sich zwischen den Hülsen (6, 8) einstellenden Vibrationsfreiraumes (12) beabstandet sind,
**dadurch gekennzeichnet,**
**dass** ein Teilabschnitt (a) der Hülsen (6, 8) zur Aufnahme des Elastomerelementes (10) so ausgebildet ist, dass er in Richtung eines Verschneidungsbereichs (b) ebenfalls eine Anschlagfläche (30) für das Elastomerelement (10) aufweist.

2. Vorrichtung nach Anspruch 1,
**dadurch gekennzeichnet,**
**dass** die innere Montagehülse (6) und/oder die äußere Montagehülse (8) zu ihrer jeweiligen Längsachse (A_{L}) rotationssymmetrisch und/oder koaxial ausgebildet sind.

3. Vorrichtung nach Anspruch 1 oder 2,
**dadurch gekennzeichnet,**
**dass** das Elastomerelement (10) eine Elastomerhülse (14) aufweist, die zwischen der inneren Montagehülse (6) und der äußeren Montagehülse (8) angeordnet ist.

4. Vorrichtung nach einem der vorhergehenden Ansprüche,
**dadurch gekennzeichnet,**
**dass** das Elastomerelement (10) bezogen auf die Längsachse (A_{L}) der inneren Montagehülse (6) und/oder der äußere Montagehülse (8) nur entlang des Teilabschnitts (a) der Längsachse (A_{L}) angeordnet ist.

5. Vorrichtung nach einem der vorhergehenden Ansprüche, insbesondere Anspruch 4,
**dadurch gekennzeichnet,**
**dass** der Teilabschnitt (a) durch eine, insbesondere radial umlaufende Aussparung (15) auf der Außenwandung (16) der inneren Montagehülse (6) und/oder auf der Innenwandung (18) der äußeren Montagehülse (8) gebildet wird.

6. Vorrichtung nach einem der vorhergehenden Ansprüche,
**dadurch gekennzeichnet,**
**dass** die innere Montagehülse (6) und die äußere Montagehülse (8) gegenseitig den Verschneidungsbereich (b) aufweisen, der derart ausgebildet ist, dass er eine Bewegung der äußeren Montagehülse (8) relativ zur inneren Montagehülse (6), insbesondere in entgegengesetzter Richtung zur Bügelaufnahme (3), über den durch die beiden Hülsen (6, 8) gebildeten Vibrationsfreiraum (12) hinaus verhindert, wobei zur Bildung des Verschneidungsbereiches (b) die innere Montagehülse (6) einen insbesondere radial aus ihrer äußeren Hülsenwandung (16) hervorspringenden Arretierungsfortsatz (26) und die äußere Montagehülse (8) eine radial in ihrer inneren Hülsenwandung (18) zurückspringende Fortsatzaufnahme (28) aufweist, in die der Arretierungsfortsatz (26) wenigstens unter Beibehaltung des Vibrationsfreiraumes (12) einragt, oder umgekehrt.

7. Vorrichtung nach einem der vorhergehenden Ansprüche, insbesondere einem der Ansprüche 4 bis 6,
**dadurch gekennzeichnet,**
**dass** bezogen auf die Längsachse (A_{L}) der inneren Montagehülse (6) und/oder der äußeren Montagehülse (8) der Verschneidungsbereich (b) und der Teilabschnitt (a) hinter einander angeordnet sind.

8. Vorrichtung nach einem der vorhergehenden Ansprüche,
**dadurch gekennzeichnet,**
**dass** die innere Montagehülse (6) in ihrem Hülseninnenraum (7) eine Befestigungselementaufnahme (22) aufweist, die mit einem Befestigungselement (24) an der Bügelaufnahme (3) in Wirkeingriff bringbar ist, oder umgekehrt.

9. Überrollbügel oder dergleichen Anbauteile zum Anbau an ein Fahrzeug, insbesondere an eine Vibrationswalze, mit wenigstens einer am Überrollbügel (2) ausgebildeten, insbesondere integrierten Vorrichtung (1) nach einem der vorhergehenden Schutzansprüche.

## Claims

1. A device (1) for fastening a rollbar (2) or similar attachment part on a vehicle (4), in particular a vibration roller, having
an inner installation sleeve (6), which is or can be operationally linked to a bar receptacle (3) on the vehicle (4),
an outer installation sleeve (8), which at least partially encloses the inner installation sleeve (6) and is or can be operationally linked to the rollbar (2), and
at least one elastomeric element (10), which positions the inner installation sleeve (6) relative to the outer installation sleeve (8) in such a way that the two sleeves (6, 8) are spaced apart from one another, partially creating a vibration clearance (12) forming between the sleeves (6, 8),
**characterized in that**
a subsection (a) of the sleeves (6, 8) for receiving the elastomeric element (10) is implemented in such a manner that it also has a stop surface (30) for the elastomeric element (10) in the direction of an intersection area (b).

2. The device according to claim 1,
**characterized in that**
the inner installation sleeve (6) and/or the outer installation sleeve (8) are implemented as rotationally-symmetric and/or coaxial to their respective longitudinal axis (A_{L}).

3. The device according to claim 1 or 2,
**characterized in that**
the elastomeric element (10) has an elastomeric sleeve (14), which is situated between the inner installation sleeve (6) and the outer installation sleeve (8).

4. The device according to any one of the preceding claims,
**characterized in that**
the elastomeric element (10) is only situated along the subsection (a) of the longitudinal axis (A_{L}) in relation to the longitudinal axis (A_{L}) of the inner installation sleeve (6) and/or the outer installation sleeve (8).

5. The device according to any one of the preceding claims and in particular claim 4,
**characterized in that**
the subsection (a) is formed by a particularly radially peripheral recess (15) on the outer wall (16) of the inner installation sleeve (6) and/or on the inner wall (18) of the outer installation sleeve (8).

6. The device according to any one of the preceding claims,
**characterized in that**
the inner installation sleeve (6) and the outer installation sleeve (8) mutually have the intersection area (b), which is implemented in such a way that it prevents a movement of the outer installation sleeve (8) relative to the inner installation sleeve (6), in particular in the opposite direction to the bar receptacle (3), beyond the vibration clearance (12) formed by the two sleeves (6, 8), wherein, to form the intersection area (b), the inner installation sleeve (6) has a locking extension (26), which particularly protrudes radially out of its outer sleeve wall (16), and the outer installation sleeve (8) has an extension receptacle (28), which is radially set back into its inner sleeve wall (18), into which the locking extension (26) protrudes while at least maintaining the vibration clearance (12), or vice versa.

7. The device according to any one of the preceding claims and in particular any one of claims 4 to 6,
**characterized in that**
the intersection area (b) and the subsection (a) are situated one behind the other in relation to the longitudinal axis (A_{L}) of the inner installation sleeve (6) and/or the outer installation sleeve (8).

8. The device according to any one of the preceding claims,
**characterized in that**
the inner installation sleeve (6) has a fastener receptacle (22) in its sleeve interior (7), which can be operationally linked to a fastener (24) on the bar receptacle (3), or vice versa.

9. A rollbar or similar attachment part for attachment on a vehicle, in particular on a vibration roller, having at least one device (1) according to any one of the preceding claims, which is implemented, in particular integrated on the rollbar (2).

## Revendications

1. Dispositif (1) pour fixer un arceau anti-retournement (2) ou une pièce rapportée similaire sur un véhicule (4), en particulier un rouleau vibrant, avec
une douille de montage intérieure (6), qui est ou peut être amenée en liaison active avec un réceptacle d'arceau (3) sur le véhicule (4),
une douille de montage extérieure (8), qui entoure au moins partiellement la douille de montage intérieure (6) et qui est ou peut être amenée en liaison active avec l'arceau anti-retournement (2), et
au moins un élément en élastomère (10), qui positionne la douille de montage intérieure (6) par rapport à la douille de montage extérieure (8) de telle manière que les deux douilles (6, 8) soient écartées l'une de l'autre en formant partiellement un interstice de découplage des vibrations (12) qui se crée entre les douilles (6, 8),
**caractérisé en ce qu'**un segment (a) des douilles (6, 8) destiné à recevoir l'élément en élastomère (10) est conçu de telle manière qu'il présente également une surface de butée (30) pour l'élément en élastomère (10) en direction d'une zone d'intersection (b).

2. Dispositif selon la revendication 1, **caractérisé en ce que** la douille de montage intérieure (6) et/ou la douille de montage extérieure (8) ont une forme symétrique en rotation et/ou coaxiale par rapport à leur axe longitudinal (A_{L}) respectif.

3. Dispositif selon la revendication 1 ou 2, **caractérisé en ce que** l'élément en élastomère (10) présente une douille en élastomère (14) qui est disposée entre la douille de montage intérieure (6) et la douille de montage extérieure (8).

4. Dispositif selon l'une des revendications précédentes, **caractérisé en ce que** l'élément en élastomère (10) est disposé, par rapport à l'axe longitudinal (A_{L}) de la douille de montage intérieure (6) et/ou de la douille de montage extérieure (8), uniquement le long du segment (a) de l'axe longitudinal (A_{L}).

5. Dispositif selon l'une des revendications, en particulier la revendication 4, **caractérisé en ce que** le segment (a) est formé par une ouverture (15), en particulier faisant le tour dans le sens radial, sur la paroi extérieure (16) de la douille de montage intérieure (6) et/ou sur la paroi intérieure (18) de la douille de montage extérieure (8).

6. Dispositif selon l'une des revendications précédentes, **caractérisé en ce que** la douille de montage intérieure (6) et la douille de montage extérieure (8) présentent l'une vis-à-vis de l'autre la zone d'intersection (b), qui est conformée de telle manière qu'un mouvement de la douille de montage extérieure (8) par rapport à la douille de montage intérieure (6), en particulier dans le sens opposé au réceptacle d'arceau (3), au-delà de l'interstice de découplage des vibrations (12) formé par les deux douilles (6, 8) soit empêché, la douille de montage intérieure (6) présentant pour former la zone d'intersection (b) une saillie d'arrêt (26) dépassant en particulier dans le sens radial de la paroi extérieure de la douille (16) et la douille de montage extérieure (8) présentant dans sa paroi de douille intérieure (18) un logement de saillie (28) en retrait dans le sens radial, dans laquelle la saillie d'arrêt (26) pénètre au moins en préservant l'interstice de découplage des vibrations (12), ou inversement.

7. Dispositif selon l'une des revendications précédentes, en particulier selon l'une des revendications 4 à 6, **caractérisé en ce que** par rapport à l'axe longitudinal (A_{L}) de la douille de montage intérieure (6) et/ou de la douille de montage extérieure (8), la zone d'intersection (b) et le segment (a) sont disposés l'un derrière l'autre.

8. Dispositif selon l'une des revendications précédentes, **caractérisé en ce que** la douille de montage intérieure (6) présente dans son espace intérieur (7) un réceptacle d'élément de fixation (22) qui peut être mis en prise active avec un élément de fixation (24) sur le réceptacle d'arceau (3), ou inversement.

9. Arceau anti-retournement ou pièces rapportées similaires à monter sur un véhicule, en particulier sur un rouleau vibrant, avec au moins un dispositif (1) selon l'une des revendications précédentes monté, en particulier intégré, sur l'arceau anti-retournement (2).
